# EUROPEAN PATENT APPLICATION

(11) **EP 1 195 677 A1**
(43) Date of publication of application: **10.04.2002**
(21) Application number: 00810925.8
(22) Date of filing: 06.10.2000
(51) Int. Cl.: G06F 9/46, G06F 9/54

(54) **Dynamic class loading**

(71) Applicant: ABB RESEARCH LTD., 8050 Zürich (CH)
(72) Inventor: Fabri, Andreas, 06130 Le Plan de Grasse (FR); Holle, Jorg, 5405 Baden-Dättwil (CH); Auf der Maur, Dominik, 8005 Zürich (CH); O'Reilly, Cheryl, Niagara Falls, ON L2H 3E7 (CA)
(74) Representative: ABB Patent Attorneys

(57) **Abstract**

In the inventive method for dynamic class loading, a first computer program unit is remotely invokable by a second program unit, and the first program unit is able to return a software object to the second program unit after being remotely invoked. For the case that a class of the returned object is not known to the second program unit, the inventive method comprises the steps of
a) a publisher of a Java Message System publishing a class file containing a class description of the returned object, and
b) the second program unit acting as a subscriber of the Java Message System and receiving the class file.
This makes it possible that the second program unit receives the class file without having to know from where the class file originates. Furthermore, since the method uses the Java Message System, no internet protocol (IP) addresses and internet communication means are required for communicating with the second program unit.

## Description

### Field of the Invention

The invention relates to the field of object oriented computer programming. It relates to a method, computer program and computer program product for the dynamic loading of classes as described in the preamble of claim 1, 8, 9 and 10, respectively.

### Background of the Invention

The invention is explained in terms of the Java computer programming language and environment, which includes concepts such as Java Virtual Machine, Remote Method Invocation, etc. that are well known to someone skilled in the art of object oriented computer programming. Java is a trademark of Sun Microsystems, Inc.

Dynamic class loading is a mechanism that is used in a Java Remote Method Invocation (RMI) infrastructure, which facilitates interactions between program objects, i.e. objects in the sense of object oriented programming.

With RMI a computer program unit or a method of a program object that resides on a first data processing unit and is executed by a first Java Virtual Machine (JVM) can be referenced from a computer program unit that is executed on a second JVM by a so-called remote reference. Using this reference, the method can be called or invoked remotely from the program unit on the second JVM. Arguments or return values of such a remote method invocation may be software objects as well. In order to transmit these software objects, they are serialized in the first JVM, that is, they are converted into a representation as a string of bytes. This string is transmitted from the first to the second JVM and deserialized again. A serialized object is self describing, that is, it contains a string with the name of a class it is an instance of. Information describing the class is represented by a class file which is needed for deserializing the object. The serialized object may contain a string with a so-called code base, which is a uniform resource locator (URL) that specifies from where the class file for the object found is retrievable, for the case that the class file is not yet known to the second JVM. The URL is the address of a hypertext transfer protocol (HTTP) server or host computer that hosts class files. Given this URL, the second JVM sends a request for the class file to the server specified by the URL. Said server returns the class file. Sending the request and returning the class file make use of a Hypertext Transfer Protocol (HTTP), which requires that the second JVM and the server have an internet protocol (IP) address and are capable of communicating by an internet protocol suite (TCP/IP). Given the class file, the second JVM is then able to use the object, i.e. extract object parameters and invoke object methods.

The specified method is limited in that the URL for obtaining the class file must be distributed with the serialized object itself, which makes the method inflexible. The requirement that both the first JVM and the host computer must be accessible through the internet protocol and have an IP address imposes a further limitation on the method.

### Description of the Invention

It is therefore an object of the invention to create a method, a computer program and a computer program product for dynamic class loading of the type mentioned initially, which overcomes the disadvantages mentioned above.

These objects are achieved by a method, a computer program and a computer program product for dynamic class loading according to the claims 1, 8, 9 and 10, respectively.

The inventive method for dynamic class loading in an object oriented computing environment, where a first computer program unit is able to return a software object to a second computer program unit after being invoked remotely, and where a class of the returned object is not known to the second program unit, comprises the steps of
a) a publisher of a Java Message System publishing a class file containing a class description of the returned object, and
b) the second program unit acting as a subscriber of the Java Message System and receiving the class file.

This makes it possible that the second program unit receives the class file without having to know from where the class file originates. Furthermore, since the method uses the Java Message System (JMS), no internet protocol (IP) addresses and internet communication means are required for communicating with the second program unit.

In a preferred embodiment of the invention, the first program unit acts as the publisher publishing the class file.

In a further preferred embodiment of the invention, all communication between program units residing on different data processing units, i.e. the transmission of class files, objects and requests is accomplished through the Java Message System.

The inventive computer program for dynamic class loading is executable on a data processing unit and comprises a class loader program unit for deserializing and loading class files that describe a software object. The computer program is able to remotely invoke another program unit and to receive a returned software object from the other program unit. The computer program, when being executed,
a) subscribes to at least one topic of a Java Message System,
b) receives a class file through the Java Message System, deserializes it and stores a representation of the corresponding class in the data processing unit.

The inventive computer program product comprises a machine readable medium on which a computer readable program code representing the inventive computer program is stored.

Further preferred embodiments are evident from the dependent patent claims.

### Brief Description of the Drawings

The subject matter of the invention will be explained in more detail in the following text with reference to preferred exemplary embodiments which are illustrated in the attached drawings, in which:
- Figures 1 and 2: each show a diagram in Unified Modeling Language (UML)-notation describing software objects involved in the invention; and
- Figure 3: shows a flow diagram of a computer program according to the invention.

The reference symbols used in the drawings, and their meanings, are listed in summary form in the list of reference symbols. In principle, identical parts are provided with the same reference symbols in the figures.

### Detailed Description of Preferred Embodiments

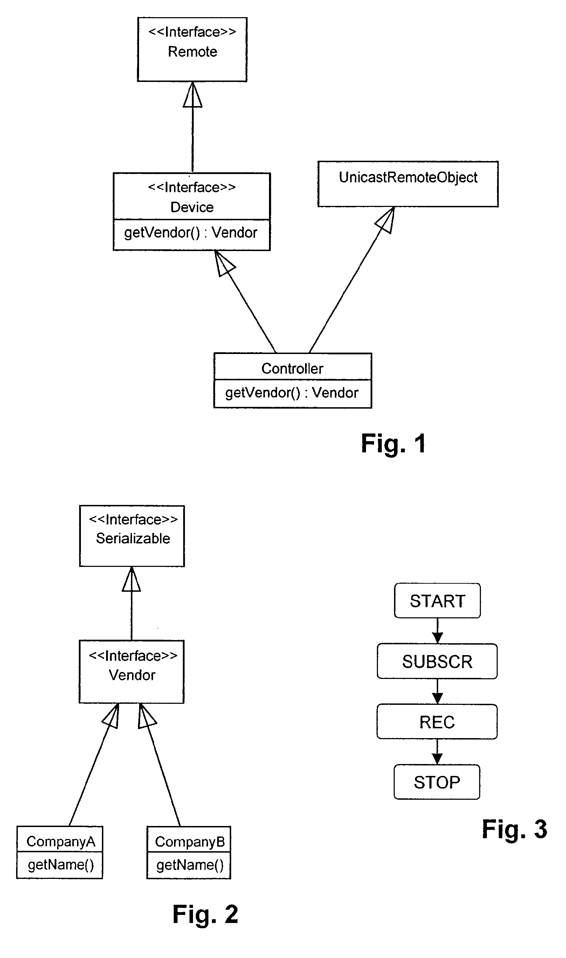

Figure 1 shows a diagram in Unified Modelling Language (UML)-notation. A class "Controller" is remote server object. The class comprises a remote interface method "getVendor()" which returns objects of the interface type "Vendor". Figure 2 shows a UML diagram specifying that the interface type "Vendor" is serializable and that it is implemented by classes such as "CompanyA" or "CompanyB". These classes both implement a method "getName()" which returns e.g. a string representing a company name.

As outlined with regard to the related art, an object of the class "Controller" i.e. an associated program code, is stored on a first data processing unit and executed by a first Java Virtual Machine (JVM). The object is an a program object in the sense of object oriented programming. Methods in the sense of object oriented programming are program units that are comparable to functions or subroutines in the non-object oriented programming terminology. In object oriented programming, methods are associated with a specific object. Methods from the object of class "Controller" may be invoked i.e. called remotely from an object of class "Caller" that is executed by a second JVM on a second data processing unit, using a Java Remote Method (JRM) infrastructure.

Typically, the first and second JVM reside on separate data processing units, for example on different computers in separate locations, e.g. in different rooms or buildings. In a preferred embodiment of the invention, at least one of the data processing units is a mobile client such as a wireless phone or personal digital assistant (PDA).

The remote call to the first JVM returns a serialized returned object of class "Vendor" to the calling object or to a calling method of the calling object. In order to use the returned object, the calling object requires a class definition of the returned object. When deserializing the returned object, the second JVM reads the class name contained in the object and tries to find a corresponding class file locally, i.e. accessible by the second data processing unit. According to the invention, the class file has been sent to the second JVM prior to the moment when it is required, or the class file is retrieved when it is required. In both cases, a Java Message System (JMS) is used for transmitting the class file.

The inventive method provides a way to make class definitions available that does not require prior knowledge about a class server, i.e. about where a specific class definition is to be found. Furthermore, the inventive method is based on JMS alone, such that no other communication channels or protocols are required for communicating with a device or JVM that involves class loading.

In the inventive method, a class file defining a class is serialized, i.e. represented as a byte array. Procedures for serializing classes, transmitting them over a network connection and loading them in a JVM are well known to someone skilled in the art. However, rather than transmitting a serialized class to an object requesting it explicitly through a URL, using a HTTP protocol, the serialized class is distributed via the JMS.

JMS is a so-called object oriented middleware system, also called enterprise messaging product, that provides a protocol and a mechanism for exchanging asynchronous messages between computer applications. JMS is described in the document "Java™ Message Service. JMS is an application programming interface (API) for accessing enterprise messaging systems from Java programs. JMS is described in the document "Java™ Message Service", Version 1.0.2 November 9, 1999, which is herewith incorporated by reference.

JMS enables an exchange of data or messages according to a publisher/subscriber communication model: In this communication model, a plurality of clients or computer program units being executed on a plurality of data processing units communicate with the JMS. Messages are associated with so-called topics. Each client specifies a plurality of topics from which it wishes to receive messages. When a given client has information that is to be distributed, it publishes the information as a message to one or more topics. The JMS automatically transmits the message to all subscribers that subscribe to the one or more topics. Depending on the flow of information, each client may take the role of a publisher or of a subscriber.

JMS is defined independent of underlying communication means, and may be implemented on a basis of e.g. TCP/IP connections, short message system (SMS) connections, User Datagram Protocol (UDP), proprietary protocols, etc.

The communication means does therefore not matter the programmer and clients using the JMS.

In the embodiment of the present invention, at least the second JVM and the first JVM and/or a class server are clients of a JMS.

JMS provides five forms of message body. Each form is defined by a message interface:
- StreamMessage - a message whose body contains a stream of Java primitive values.
- MapMessage - a message whose body contains a set of name-value pairs where names are strings and values are Java primitive types.
- TextMessage - a message whose body contains a text string. This message type is intended transferring extended markup language (XML) files.
- ObjectMessage - a message that contains a serializable Java object or a collection of Java objects.
- BytesMessage - a message that contains a stream of uninterpreted bytes.

According to the invention, a BytesMessage is used to represent a class file. A class loader in the second JVM requires data of type ByteArray as an input. In order to present a BytesMessage containing a class file to the class loader, the BytesMessage is converted accordingly, e.g. by the client, before it is passed to the class loader.

When publishing a class file, there are different variants of the invention, depending on where the class file is published: In a first preferred variant, a publisher that publishes objects in given topics of a JMS also publishes associated class files in the same topics. This allows communication through JMS alone: One client of a group of clients that exchange objects through one or more topics of a JMS publishes a class file prior to publishing an associated object for the first time. The other clients of the group subscribing to these topics receive the class file and store it for later use, i.e. when a corresponding object is published.

A subscriber distinguishes between objects and classes either by the fact that objects are transmitted with an ObjectMessage and classes are transmitted by a BytesMessage, or by a dedicated flag included in a message header. In this first variant of the invention, a JVM that may need a class file subscribes to topics in which objects that the JVM is interested in are published.

In a second preferred variant of the invention, a publisher publishes class files in *all* topics known to the JMS. Correspondingly, any client subscribing to at least one topic receives a given class file. This option minimizes administrative overhead but is inefficient.

In a third preferred variant of the invention, a publisher publishes class files in special management topics that are reserved for class files. Alternatively, a descriptor of a topic (which follows URL syntax) is postfixed by a string such as "/classMgmt". A JVM that may need a class file subscribes to these management topics.

In the three variants shown so far, a class file is published *before* a corresponding class needs to be deserialized by a subscriber. A subscribing JVM receives and stores the class file, which then is immediately locally available when deserializing.

In the case that a subscriber subscribes to a topic *after* a set of given classes have been published, the subscriber does not receive the class files. When the deserialization of an object fails because the class is not at hand, the subscriber makes use of one of the following variants of the invention:

In a fourth preferred variant of the invention, it is assumed that the object and its class file are published by the same publisher. The subscriber sends a request to the publisher of the object, requesting the corresponding class. Information about the publisher of the object is included as message source information in a message header of a message containing the object. The publisher publishes the requested class file. In a preferred embodiment of the invention, both the sending of the request and the publishing of the class file are accomplished through the JMS.

In a fifth preferred variant of the invention, it is assumed that the object and its class file may have different publishers. The subscriber sends a message with a class request to a special management topic that publishing applications listen to. At least one publishing application publishes the requested class on that same or on another dedicated management topic. Again, both the request and the publishing of the class file are preferably accomplished through the JMS.

In a sixth preferred variant of the invention, it is assumed that a dedicated class server exists. The subscriber sends a message with a class request to a special management topic that the class server listens to. The class server then publishes the requested class on that same or on another dedicated management topic. The class server obtains the class from publishers with methods as described in the first, second or third variant of the invention. Again, both the request and the publishing of the class file are preferably accomplished through the JMS. As having such a central class server is a potential single point of failure, there may be a plurality of class servers. As the class servers communicate with and through the JMS, this needs no additional configuration and is transparent on an application level. The use of a class server is an advantage regarding system performance when the publisher is a mobile client. In this case the class is transmitted only once over a low bandwidth wireless connection.

Figure 3 shows a flow diagram of the inventive computer program, which is executed on the second JVM residing on the second data processing unit and comprises the second program unit. In a first step SUBSCR, the computer program subscribes to at least one topic of a Java Message System. In a second, later step REC, the computer program receives a class file through the Java Message System, deserializes it and stores a representation of the corresponding class. As described in the above variants of the invention, the steps of subscribing SUBSCR and receiving a class file REC take place either prior to receiving a serialized software object of this class, or after receiving such a software object and failing to deserialize it.

An advantage of the inventive method is, that it preferably uses only the JMS system, i.e. the transmission of class files, objects and requests is accomplished through the Java Message System alone. As a result, the method is completely independent of whatever communication media and protocols the JMS uses for exchanging data. In particular, no TCP/IP connections are required. Another advantage is that the inventive method described is not visible to the JMS, i.e. the JMS is not concerned with contents of the published data and can therefore be used without any modifications.

## Claims

1. Method for dynamic class loading in an object oriented computing environment, in which a first computer program unit is executable by a first data processing unit and is remotely invokable by a second computer program unit that is executable by a second data processing unit, where the first program unit is able to return a software object to the second program unit after being remotely invoked, and where a class of the returned object is not known to the second program unit, **characterized in that** the method comprises the following steps of
a) a publisher of aJava Message System publishing a class file containing a class description of the returned object, and
b) the second program unit acting as a subscriber of the Java Message System and receiving the class file.

2. Method according to claim 1, **characterized in that** the first computer program unit acts as the publisher publishing the class file.

3. Method according to claim 1, **characterized in that** the steps according to the method take place prior to a step of transmitting the returned object that is described by the class file to the second program unit.

4. Method according to claim 1, **characterized in that** the steps according to the method are preceded by the following steps of
x) the first program unit transmitting the returned object that is described by the class file to the second program unit,
y) the second program unit determining that a class file describing the returned object is not known to the second program unit,
z) the second program unit requesting the class file by sending a message with a class request.

5. Method according to one of the preceding claims, **characterized in that** the transmission of class files, objects and requests is accomplished through the Java Message System.

6. Method according to claim 1, **characterized in that** the first and the second data processing unit are in separate locations.

7. Method according to claim 1, **characterized in that** the first and second computer program units are methods of objects that are executable on a first and second Java Virtual Machine, respectively.

8. Method for dynamic class loading in an object oriented computing environment, in which a first computer program unit is executable by a first data processing unit and is remotely invokable by a second computer program unit that is executable by a second data processing unit, where the first program unit is able to return a software object to the second program unit after being remotely invoked, and where a class of the returned object is not known to the second program unit, **characterized in that** the method comprises the following steps being performed by the second program unit:
a) subscribing to a Java Message System,
b) receiving a class file containing a class description of the returned object,
c) deserializing the class file and storing a representation of the corresponding class.

9. Computer program for dynamic class loading which is executable on a data processing unit and comprises a class loader program unit for deserializing and loading class files that describe a software object and which computer program is able to remotely invoke another program unit and to receive a returned software object from the other program unit, **characterized in that** the computer program, when being executed,
a) subscribes to at least one topic of a Java Message System,
b) is able to receive a class file through the Java Message System,
c) upon receiving the class file through the Java Message System, deserializes it and storesa representation of the corresponding class.

10. Computer program product with a machine readable medium on which a computer readable program code representing the computer program of claim 9 is stored.
